# EUROPEAN PATENT SPECIFICATION

(11) **EP 3 726 602 B1**
(45) Date of publication and mention of the grant of the patent: **10.11.2021**
(21) Application number: 20158768.0
(22) Date of filing: 21.02.2020
(51) Int. Cl.: H01M 10/04, H01M 10/052, H01M 10/058, H01M 50/103, H01M 50/116, H01M 50/15, H01M 50/169

(54) **SECONDARY BATTERY**
SEKUNDÄRBATTERIE
BATTERIE SECONDAIRE

(30) Priority: 18.04.2019 KR 20190045576
(43) Date of publication of application: 21.10.2020
(73) Proprietor: Samsung SDI Co., Ltd., Gyeonggi-do 17084 (KR)
(72) Inventor: Oh, Dae Sik, 17084 Yongin-si, Gyeonggi-do (KR)
(74) Representative: Gulde & Partner

(56) References cited:
- US-A1- 2009 311 594
- US-A1- 2012 064 389
- US-A1- 2015 017 521
- US-B2- 9 123 916

## Description

### BACKGROUND

### 1. Field

The present disclosure relates to a secondary battery.

### 2. Description of the Related Art

A battery may be classified as a prismatic battery, a cylindrical battery, a pouch battery, etc., according to the shape of a case. A prismatic or cylindrical battery may be manufactured by inserting an electrode assembly having a positive electrode, a negative electrode and a separator into a metal can (or case) having the corresponding shape and sealing the electrode assembly, while a pouch type battery may be manufactured by enclosing an electrode assembly using an aluminum foil coated with an insulator.

Traditional battery can (case or housing) manufacturing methods may include a deep drawing process, an impact process, and/or the like. For example, the US 2012/0064389 A1 and the US 2009/0311594 A1 disclose battery cans obtained by deep drawing the cans having supporting stepped portions. The US 9 123 916 B2 discloses a can for a battery with a welded top portion. In an example, the deep drawing process is performed such that a sheet-shaped metal plate is placed on a molding die and punching operations are performed on the metal plate about ten times using a punch, thereby completing the can. In an example, the impact process is performed such that a slug in the form of a billet is placed on a molding die and a strong punching operation is performed on the slug about one time using a punch, thereby competing the can. The impact process can reduce the number of processing steps, thereby lowering the manufacturing cost.

However, the related art deep drawing process and the related art impact process are both limited in reducing a can thickness due to the respective manufacturing process characteristics and reveal a big deviation in the thickness of the can according to the area of the can. In addition, the related art deep drawing process and the related art impact process are problematic in that the manufacturing cost of the battery can is quite high.

### SUMMARY

One or more aspects of embodiments of the present invention are directed toward a secondary battery, which can stably (suitably) support a cap plate even if the length of a can is increased.

Embodiments of the present invention are also directed toward a secondary battery, which can improve manufacturability while reducing the processing cost by providing a stepped part in a can (or case) using a press forging process.

According to the present invention, there is provided a secondary battery according to claim 1.

Each of the long side portions of the case may include one or more of the stepped parts.

The short side portions of the case may include one or more stepped parts.

Each of the long side portions of the case may include one or more of the stepped parts, and each of the short side portions of the case may include one or more stepped parts.

The stepped parts may have a uniform depth in the long side portions in a first direction, the first direction being a thickness direction of the case.

Curved portions are located between the long side portions and the short side portions.

The stepped parts extend along the long side portions toward the curved portions.

The stepped parts may extend along entire lengths of the long side portions.

The stepped parts have a depth in the curved portions in a first direction, the first direction being a thickness direction of the case, and the depth of the stepped parts in the curved portions is gradually reduced toward the short side portions.

An interior curvature radius of a top end of the case having the stepped parts may be larger than that of a bottom end of the case.

A curvature radius of a corner of the cap plate may be equal to the interior curvature radius of the top end of the case.

The stepped parts may have a uniform height in a second direction in the long side portions and the curved portions, the second direction being a height direction of the case.

The height of each of the stepped parts in the second direction may be equal to a thickness of the cap plate in the second direction.

The stepped parts may extend from the curved portions to at least a portion of the short side portions.

The stepped parts have a depth in the short side portions in the first direction, and the depth of the stepped parts in the short side portions may be gradually reduced.

The cap plate may be coupled to the stepped parts.

Each of the short side portions may be configured by combining a first short side portion bent and extended from the bottom portion and second and third short side portions extending from a respective one of the long side portions, and the short side portions may include welding portions which connect the first, second, and third short side portions to each other by welding.

Each of the short side portions may be formed by connecting a first short side portion bent and extended from the bottom portion and second and third short side portions extending from a respective one of the long side portions.

As described above, according to various embodiments of the present invention, a stepped part is located in each of long side portions to stably support a cap plate even if the length of a case is increased.

In addition, according to various embodiments of the present invention, a stepped part is formed through a forging process using a press in a state in which a case is in form of a metal plate which has yet to be bent, thereby improving manufacturability while reducing the processing cost.

### BRIEF DESCRIPTION OF THE DRAWINGS

FIG. 1 is a perspective view illustrating an example secondary battery according to an embodiment of the present invention.
FIGS. 2A and 2B are cross-sectional views illustrating example secondary batteries.
FIGS. 3A to 3G are perspective views or cross-sectional views illustrating an example method for manufacturing example secondary batteries.
FIG. 4A is a plan view illustrating an example secondary battery.
FIG. 4B is a cross-sectional view taken along the line D-D of FIG. 4A.
FIG. 4C is a cross-sectional view taken along the line E-E of FIG. 4A.
FIG. 5 is a plan view illustrating a stepped part formed in a case of an example secondary battery.

### DETAILED DESCRIPTION

Hereinafter, example embodiments of the present invention will be described in more detail.

In addition, in the accompanying drawings, sizes or thicknesses of various components may be exaggerated for brevity and clarity. Like numbers refer to like elements throughout. In addition, it will be understood that when an element A is referred to as being "connected to" an element B, the element A can be directly connected to the element B or one or more intervening elements C may be present and the element A and the element B may then be indirectly connected to each other.

As used herein, the singular forms are intended to include the plural forms as well, unless the context clearly indicates otherwise. It will be further understood that the terms "comprise" or "include" and/or "comprising" or "including," when used in this specification, specify the presence of stated features, numbers, steps, operations, elements, and/or components, but do not preclude the presence or addition of one or more other features, numbers, steps, operations, elements, components, and/or groups thereof.

Meanwhile, the term "welding portion" used throughout this specification can be referred to as a temporary welding portion and/or a welding portion in some cases, which is for representing the welding sequence and function but is not intended to limit the invention. In addition, the term "welding" as used herein mainly refers to laser welding, and examples of laser used for welding may include, but not limited to, CO2 laser, fiber laser, disk laser, semiconductor laser and/or YAG(Yttrium Aluminum Garnet) laser. In addition, the terms "second short side portion" and "third short side portion" can be collectively referred to as second short side portions, in some cases.

Expressions such as "at least one of," "one of," and "selected from," when preceding a list of elements, modify the entire list of elements and do not modify the individual elements of the list. Further, the use of "may" when describing embodiments of the present invention refers to "one or more embodiments of the present invention."

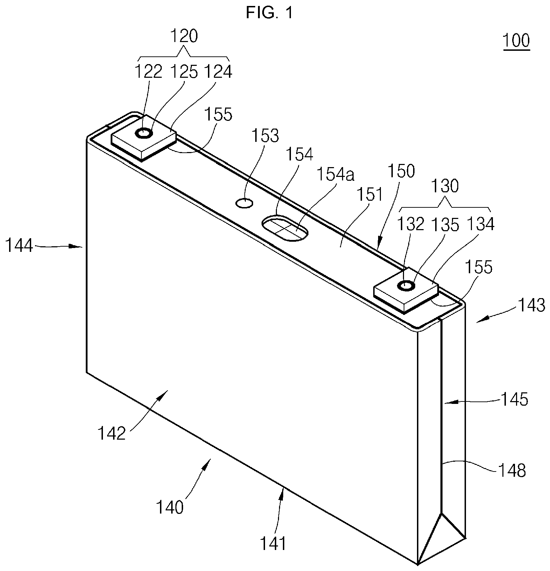

FIG. 1 is a perspective view illustrating an example secondary battery according to an embodiment of the present invention. In the example shown in FIG. 1, the secondary battery 100 may include an electrode assembly 110, a first terminal 120, a second terminal 130, a can (or case) 140 and a cap assembly 150.

In one or more embodiments, the can 140 may be provided by blanking and/or notching, bending and welding a metal plate and may have a substantially hexahedral shape having an opening through which the electrode assembly 110 is inserted and placed and onto which the cap assembly 150 is mounted. In one or more embodiments, the can 140 may include a rectangular bottom portion 141 having long sides and short sides, long side portions 142 and 143 bent and extended from the respective long sides of the bottom portion 141 to the cap assembly 150, and short side portions 144 and 145 extended from the respective short sides of the bottom portion 141 and the long side portions 142 and 143. The can 140 will be described below in more detail.

In FIG. 1, the can 140 and the cap assembly 150 assembled (coupled) to each other are illustrated. As such, the opening, which is a substantially open part of a region of the can 140 corresponding to the cap assembly 150, is not illustrated in FIG. 1. In one or more embodiments, the interior surface of the can 140 may be subjected to insulation treatment such that the can 140 is insulated from the electrode assembly, the first terminal 120, the second terminal 130 and the cap assembly 150.

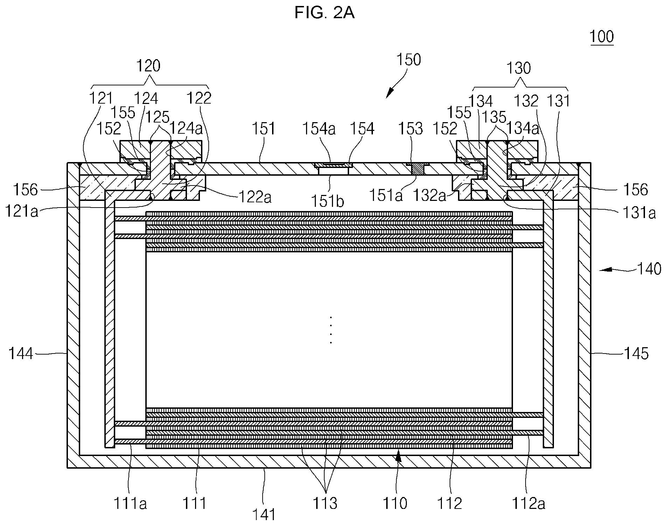

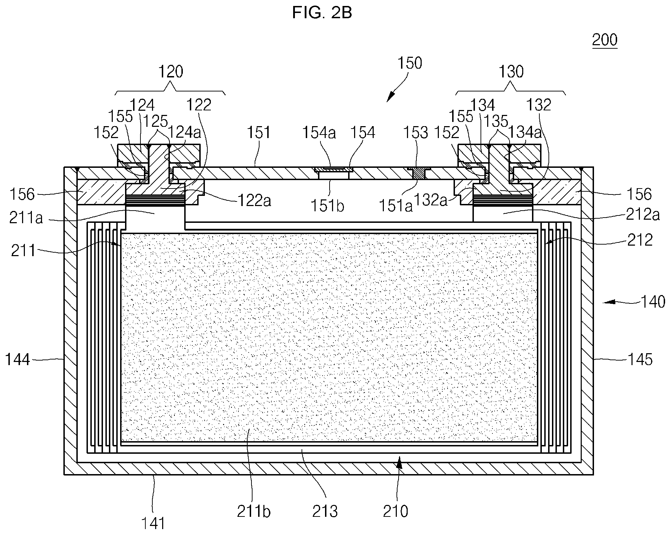

FIGS. 2A and 2B are cross-sectional views illustrating example secondary batteries 100 and 200. In the example shown in FIG. 2A, the secondary battery 100 may include an electrode assembly 110 having a winding axis extending in a horizontal direction (i.e., in a direction substantially parallel with a lengthwise direction of the cap assembly 150). In the example shown in FIG. 2B, the secondary battery 200 may include an electrode assembly 210 having a winding axis extending in a vertical direction (i.e., in a direction substantially perpendicular to the lengthwise direction of the cap assembly 150). In one or more embodiments, the electrode assembly may be a stacked electrode assembly, not a wound electrode assembly.

The secondary battery 100 shown in FIG. 2A will now be described in more detail. The electrode assembly 110 may be formed by winding or stacking a stacked structure including a first electrode plate 111, a separator 113, and a second electrode plate 112, which are thin plates or layers. In one or more embodiments, the first electrode plate 111 may operate as a negative electrode and the second electrode plate 112 may operate as a positive electrode, and vice versa.

In one or more embodiments, the first electrode plate 111 may be formed by coating a first active material, such as graphite and/or carbon, on a first electrode collector made of a metal foil, such as copper, a copper alloy, nickel, and/or a nickel alloy, and may include a first uncoated portion 111a that is not coated with the first active material. In one or more embodiments, the second electrode plate 112 may be formed by coating a second active material, such as a transition metal oxide, on a second electrode collector made of a metal foil, such as aluminum or an aluminum alloy, and may include a second uncoated portion 112a that is not coated with the second electrode material. In one or more embodiments, the separator 113, which is located between the first and second electrode plates 111 and 112, may prevent or reduce short circuits between the first and second electrode plates 111 and 112, and may allow lithium ions to move (e.g., may facilitate the movement of lithium ions). In one or more embodiments, the separator 113 may include polyethylene, polypropylene, or a composite film of polyethylene and polypropylene. In some embodiments, the separator 113 may be replaced by an inorganic solid electrolyte, such as a sulfide-based compound, an oxide-based compound, or a sulphate compound, not necessitating a liquid- or gel-phase electrolyte solution. The first terminal 120 and the second terminal 130 electrically connected to the first electrode plate 111 and the second electrode plate 112, respectively, are located at opposite ends of the electrode assembly 110. In one or more embodiments, the electrode assembly 110 can be accommodated in the can 140 with an electrolytic solution. In one or more embodiments, the electrolytic solution may include an organic solvent, such as ethylene carbonate (EC), propylene carbonate (PC), diethyl carbonate (DEC), ethyl methyl carbonate (EMC), and/or dimethyl carbonate (DMC), and a lithium salt, such as LiPF₆and/or LiBF₄. In one or more embodiments, if the inorganic solid electrolyte is used, the electrolytic solution may be omitted.

The first terminal 120 may be made of a metal and may be electrically connected to the first electrode plate 111. In one or more embodiments, the first terminal 120 may include a first collector plate 121, a first terminal pillar 122 and a first terminal plate 124. In one or more embodiments, the first collector plate 121 may be brought into contact with the first uncoated portion 111a protruding to one end of the electrode assembly 110. The first collector plate 121 may be welded to the first uncoated portion 111a. In one or more embodiments, the first collector plate 121 may be roughly in an inverted L-shaped ("┌" ) configuration and may have a terminal hole 121a located in its top portion. In one or more embodiments, the first terminal pillar 122 may be inserted into the terminal hole 121a, followed by riveting and/or welding. In one or more embodiments, the first collector plate 121 may be made of copper or a copper alloy. In one or more embodiments, the first terminal pillar 122 penetrates the cap plate 151 to be described later and is electrically connected to the first collector plate 121 under the cap plate 151. In one or more embodiments, the first terminal pillar 122 is extended to an upper portion of the cap plate 151 and upwardly protruded by a set or predetermined length, and a flange 122a may be located below the cap plate 151 to prevent or protect the first terminal pillar 122 from being dislodged from the cap plate 151. A portion of the first terminal pillar 122 positioned below the flange 122a is fitted into the first terminal hole 121a of the first collector plate 121, followed by riveting and/or welding. In one or more embodiments, the first terminal pillar 122 may be electrically insulated from the cap plate 151. In one or more embodiments, boundary regions of the upwardly exposed portion of the first terminal pillar 122 and the first terminal plate 124 may be welded to each other. For example, laser beam may be supplied to the boundary regions of the upwardly exposed portion of the first terminal pillar 122 and the first terminal plate 124 to melt the boundary regions thereof, followed by cooling, thereby welding the boundary regions. The welded regions are designated by reference number 125 in FIG. 2A. Meanwhile, a bus bar made of aluminum or an aluminum alloy may be welded to the first terminal plate 124.

The second terminal 130 may also be made of a metal and may be electrically connected to the second electrode plate 112. In one or more embodiments, the second terminal 130 may include a second collector plate 131, a second terminal pillar 132 and a second terminal plate 134. In one or more embodiments, the second collector plate 131 may be brought into contact with the second uncoated portion 112a protruding to one end of the electrode assembly 110. In one or more embodiments, the second collector plate 131 may be roughly in an inverted L-shaped ("┐") configuration and may have a terminal hole 131a located in its top portion. In one or more embodiments, the second terminal pillar 132 may be inserted into the terminal hole 131a and then coupled thereto. In one or more embodiments, the second collector plate 131 may be made of, for example, but not limited to, aluminum or an aluminum alloy. In one or more embodiments, the second terminal pillar 132 penetrates (e.g., goes through) the cap plate 151 to be described later and is electrically connected to the second collector plate 131 under the cap plate 151. In one or more embodiments, the second terminal pillar 132 is extended to an upper portion of the cap plate 151 and upwardly protruded by a set or predetermined length, and a flange 132a may be located below the cap plate 151 to prevent or protect the second terminal pillar 132 from being dislodged from the cap plate 151. A portion of the second terminal pillar 132 positioned below the flange 132a is fitted into the second terminal hole 131a of the second collector plate 131, followed by riveting and/or welding. Here, the second terminal pillar 132 may be electrically insulated from the cap plate 151. In one or more embodiments, the second terminal pillar 132 may be made of aluminum or an aluminum alloy. The second terminal plate 134 has a hole 134a. In some embodiments, the second terminal plate 134 is coupled to the second terminal pillar 132. That is, the second terminal pillar 132 is coupled to the hole 134a of the second terminal plate 134. In some embodiments, the second terminal pillar 132 and the second terminal plate 134 may be riveted and/or welded to each other. In one or more embodiments, boundary regions of the upwardly exposed portion of the second terminal pillar 132 and the second terminal plate 134 may be welded to each other. For example, laser beam may be supplied to the boundary regions of the upwardly exposed portion of the second terminal pillar 132 and the second terminal plate 134 to melt the boundary regions, followed by cooling, thereby welding the boundary regions. The welded regions are designated by reference number 135 in FIG. 2A. Meanwhile, a bus bar made of aluminum or an aluminum alloy may be easily welded to the second terminal plate 134. Here, the second terminal plate 134 may be electrically connected to the cap plate 151. Thus, the cap plate 151 and the can 140 may have the same polarity as the second terminal 130 (e.g., a positive polarity).

The cap assembly 150 may be coupled to the can 140. In one or more embodiments, the cap assembly 150 may include the cap plate 151, a seal gasket 152, a plug 153, a safety vent 154, an upper coupling member 155 and a lower insulating member 156. The cap plate 151 may seal the opening of the case 140, and may be made of the same material as the case 140. In one or more embodiments, the cap plate 151 may be coupled to the can 140 by laser welding. In the embodiments in which the cap plate 151 has the same polarity as the second terminal 130, the cap plate 151 and the can 140 may have the same polarity. The seal gasket 152 made of an insulating material may be located between each of the first terminal pillar 122 and the second terminal pillar 132 and the cap plate 151 at a bottom end of the cap plate 151 and may seal regions between each of the first terminal pillar 122 and the second terminal pillar 132 and the cap plate 151. The seal gasket 152 may prevent or reduce external moisture from permeating into the secondary battery 100 or prevent or reduce the electrolyte accommodated in the secondary battery 100 from being effused outside. The plug 153 may seal an electrolyte injection hole 151a of the cap plate 151. The safety vent 154 may be installed in a vent hole 151b of the cap plate 151 and may have a notch 154a configured to be openable at a preset (or set) pressure. The upper coupling member 155 may be located between each of the first terminal pillar 122 and the second terminal pillar 132 and the cap plate 151 at a top end of the cap plate 151. In some embodiments, the upper coupling member 155 may closely contact the cap plate 151. In some embodiments, the upper coupling member 155 may also closely contact and the seal gasket 152. The upper coupling member 155 may insulate the first terminal pillar 122 and the second terminal pillar 132 from the cap plate 151. In one or more embodiments, the upper coupling member 155 located in the second terminal pillar 132 may electrically connect the second terminal plate 134 and the cap plate 151 to each other. Accordingly, the second terminal 130 may have the same polarity as the cap plate 151 and the can 140. The lower insulating member 156 may be located between each of the first collector plate 121 and the second collector plate 131 and the cap plate 151 and may prevent or reduce an unnecessary short circuit from being generated. That is, the lower insulating member 156 may prevent or reduce short circuits from being generated between the first collector plate 121 and the cap plate 151 and between the second collector plate 131 and the cap plate 151.

The secondary battery 200 shown in FIG. 2B will now be described. The secondary battery 200 is different from the secondary battery 100 in terms of the construction of the electrode assembly 210 and the connection relationships between the electrode assembly 210 and each of the terminals 120 and 130. A first electrode tab 211a may be positioned between the electrode assembly 210 and a first terminal pillar 122 of a first terminal 120, and a second electrode tab 212a may be positioned between the electrode assembly 210 and a second terminal pillar 132 of a second terminal 130. Specifically, the first electrode tab 211a may be extended from a top end of the electrode assembly 210 to a bottom end of the first terminal pillar 122 of the first terminal 120 to then be electrically connected or welded to a planar flange 122a provided in the first terminal pillar 122. In some embodiments, the second electrode tab 212a may be extended from a top end of the electrode assembly 210 to a bottom end of the second terminal pillar 132 of the second terminal 130 to then be electrically connected or welded to a planar flange 132a provided in the second terminal pillar 132. The first electrode tab 211a may be either a first uncoated portion of the first electrode plate 211 of the electrode assembly 210, which is not coated with a first active material 211b, or a separate member connected to the first uncoated portion. Here, the first uncoated portion may be made of the same material as the first electrode plate 211, and a material for forming the separate member may be one selected from the group consisting of nickel, a nickel alloy, copper, a copper alloy, aluminum, an aluminum alloy, and equivalents thereof. In some embodiments, the second electrode tab 212a may be either a second uncoated portion of the second electrode plate 212 of the electrode assembly 210, which is not coated with a second active material, or a separate member connected to the second uncoated portion. Here, the second uncoated portion may be made of the same material as the second electrode plate 212, and a material for forming the separate member may be one selected from the group consisting of aluminum, an aluminum alloy nickel, a nickel alloy, copper, a copper alloy, and equivalents thereof.

As described above, since a winding axis of the electrode assembly 210 and terminal axes of the terminals 120 and 130 are parallel or horizontal with each other, the electrode assembly 210 has excellent electrolyte impregnation capability when an electrolyte is injected, and internal gases are rapidly transferred to a safety vent 154 during overcharging to make the safety vent 154 quickly operate. In addition, electrode tabs (uncoated portions or separate members) of the electrode assembly 210 are directly electrically connected to the terminals 120 and 130, which shortens electrical paths, thereby reducing internal resistance of the secondary battery 100 while reducing the number of components of the secondary battery 100.

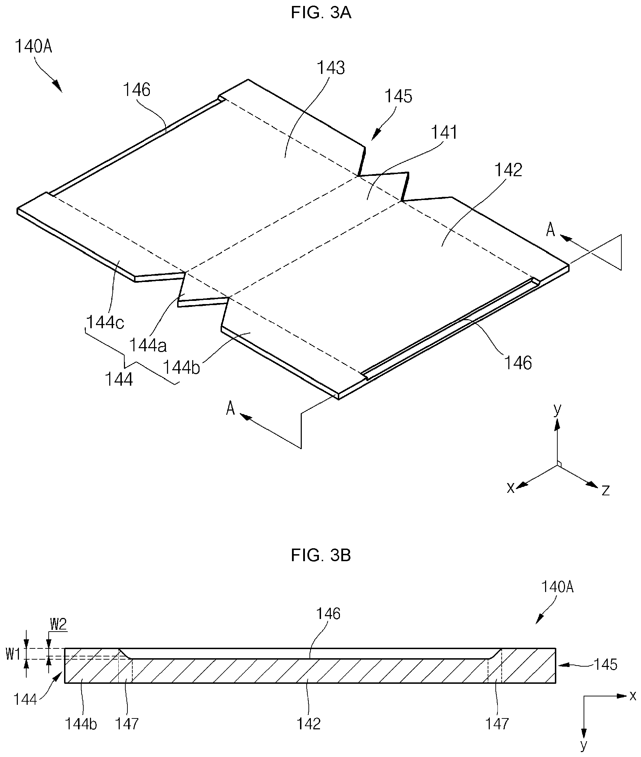

FIGS. 3A to 3G are perspective views or cross-sectional views illustrating an example method for manufacturing example secondary batteries 100 and 200. FIG. 3A shows a can at an initial stage of manufacture, and FIG. 3B is a cross-sectional view taken along the line A-A of FIG. 3A.

In the example shown in FIG. 3A, a substantially planar metal plate 140A having a substantially uniform thickness may be provided using a blanking process and/or a notching process. In one or more embodiments, the metal plate 140A may include a substantially rectangular bottom portion 141 having long sides and short sides, long side portions 142 and 143 horizontally extending from the respective long sides of the bottom portion 141, short side portions 144 and 145 horizontally extending from the bottom portion 141 and the respective long side portions 142 and 143, and stepped parts (or steps) 146 located in each of the long side portions 142 and 143.

In one or more embodiments, one of the short side portions 144 may include a first short side portion 144a extending from the short side of the bottom portion 141 in a substantially triangular shape, a second short side portion 144b horizontally extending from the long side portion 142, and a third short side portion 144c horizontally extending from the other long side portion 143. Here, the second short side portion 144b may include an inclined periphery (e.g., an inclined side) facing the first short side portion 144a, and the third short side portion 144c may also include an inclined periphery (e.g., an inclined side) facing the first short side portion 144a. In other words, the second and third short side portions 144b and 144c may be configured to match (align) with the first short side portion 144a when the can 140 is assembled.

In some embodiments, the length of each of the long side portions 142 and 143 (in an x-axis direction) may be substantially equal to that of each of the long sides of the bottom portion 141. The width of the first short side portion 144a (in a z-axis direction) may be substantially equal to that of each of the short sides of the bottom portion 141. The overall width of the second and third short side portions 144b and 144c (measured in the z-axis direction after the can 140 is assembled) may be substantially equal to the width of each of the short sides of the bottom portion 141. In some embodiments, the height of each of the long side portions 142 and 143 may be substantially equal to that of each of the short side portions 144 and 145 (measured in a y-axis direction after the can 140 is assembled). In FIG. 3A, dotted lines indicate bending lines in a subsequent process to be described later in more detail.

The stepped parts 146 may be located along first ends (or edges) of each of the long side portions 142 and 143. In more detail, the stepped parts 146 are located at the ends (or edges) of the long side portions 142 and 143 that are facing away from the bottom portion 141 in the metal plate 140A, and the stepped parts 146 may include grooves having a set or predetermined depth. In one or more embodiments, the stepped parts 146 may be formed by a forging process using a press. The stepped parts 146 may be configured to have a set or predetermined depth in the z-axis direction (a thickness direction of the long side portions 142 and 143 when the can 140 is assembled) and be positioned a set or predetermined distance away from the bottom portion 141 in the y-axis direction in which the long side portions 142 and 143 are extended when the can 140 is assembled. Here, the z-axis direction (thickness direction of the long side portions 142 and 143 when the can 140 is assembled) is defined as a first direction, and the y-axis direction (which is crossing (e.g., perpendicular to) the first direction and in which the long side portions 142 and 143 are extended from the bottom portion 141 when the can 140 is assembled) is defined as a second direction. In one or more embodiments, the first direction (z-axis) may correspond to a thickness direction of the can 140, and the second direction (y-axis) may correspond to a height direction of the can 140.

In some embodiments, the stepped parts 146 are where the cap assembly 150 is placed when the metal plate 140A is bent and welded to form the can 140 in a later process. The stepped parts 146 may be located in both of the long side portions 142 and 143 positioned at opposite sides of the bottom portion 141. However, for brevity, the following description will focus on only the stepped part 146 located in one long side portion 142. Referring to FIG. 3B, curved portions 147 are located between the long side portion 142 and each of the short side portions 144 and 145. The curved portions 147 are boundary regions where the long side portion 142 and the short side portions 144 and 145 meet, as indicated by dotted lines in FIG. 3A. In practice, the boundary regions are bent in curved shapes when bending is performed between the long side portion 142 and each of the short side portions 144 and 145. Therefore, as shown in FIG. 3B, the boundary regions between the long side portion 142 and the short side portions 144 and 145, which are bent portions, will be defined as curved portions 147. The stepped parts 146 are configured to extend along the long side portion 142 toward the curved portions 147 (e.g., from one curved portion 147 to the other curved portion 147). However, the stepped parts 146 may not be entirely provided in the short side portions 144 and 145 (e.g., the short side portions 144 and 145 may not include any portion of the stepped parts 146), which is for the purpose of securing a welding area and a welding thickness when the second short side portion 144b and the third short side portion 144c are welded in a later process. For example, if the stepped parts 146 were entirely located in the second and third short side portions 144b and 144c, the second and third short side portions 144b and 144c may have relatively small thicknesses, resulting in welding failures. Therefore, according to embodiments of the present invention, the stepped parts 146 are provided on the long side portion 142 and the curved portions 147, thereby securing welding reliability.

The stepped part 146 is formed to have a uniform depth W1 in the first direction (z-axis) in the long side portion 142. For example, in the long side portion 142, the depth W1 of the stepped part 146 may be approximately (about) 20% of the thickness of the metal plate 140A in the y-axis direction (when the can 140 is assembled, the depth W1 is measured in the z-axis direction). In some embodiments, in the curved portions 147 of the metal plate 140A, the stepped part 146 may have a depth W2 in the y-axis direction (when the can 140 is assembled, the depth W2 is measured in the z-axis direction) that may be gradually reduced toward the short side portions 144 and 145. Therefore, the depth W1 of the stepped part 146 in the long side portion 142 may be larger than the depth W2 of the stepped part 146 in the curved portions 147 (W1>W2). In some embodiments, the stepped part 146 is formed to have a set or predetermined height along the second direction (y-axis). For example, the stepped part 146 is formed to have a uniform height D along the second direction (y-axis) in the long side portion 142 and the curved portions 147 when the can 140 is assembled (in the metal plate 140A, the height D of the stepped parts 146 is measured in the z-axis direction). In some embodiments, the second direction (y-axis) height D of the stepped part 146 may be equal to the thickness of the cap plate 151 in the second direction, when the can 140 is assembled. The stepped part 146 may function to securely (suitably) place and/or fix the cap plate 151 to the can 140. In some embodiments, this configuration can be commonly applied to the stepped part 146 located at the other long side portion 143.

In one or more embodiments, the metal plate 140A may include aluminum (Al), iron (Fe), copper (Cu), titanium (Ti), nickel (Ni), magnesium (Mg), chrome (Cr), manganese (Mn), zinc (Zn) or one or more alloys of any of these elements. In one or more embodiments, the metal plate 140A may include nickel (Ni) plated iron (Fe) and/or SUS (e.g., SUS 301, SUS 304, SUS 305, SUS 316L, and/or SUS 321).

In one or more embodiments, the metal plate 140A may have a thickness in the range from approximately (about) 0.1 mm to approximately (about) 10 mm, and a deviation in the thickness of the metal plate 140A in all areas may be in the range from approximately (about) 0.1% to approximately (about) 1%. Therefore, embodiments of the present invention may provide the can 140 that is relatively thin and has a small thickness deviation, compared to the related art can.

In one or more embodiments, the metal plate 140A may be preprocessed to facilitate a bending process and/or a welding process, which will be described below. In one or more embodiments, the metal plate 140A may be subjected to annealing treatment performed in a predetermined gas atmosphere and a set or predetermined temperature range for a set or predetermined period of time. In one or more embodiments, the annealing treatment may be performed in an atmosphere of inert gas, such as argon (Ar) and/or nitrogen (N2) at a temperature ranging from approximately (about) 300°C to approximately (about) 1000°C for approximately (about) 10 seconds to approximately (about) 60 minutes. The annealing treatment may increase the elongate of the metal plate 140A by approximately (about) 5% to approximately (about) 60%. Accordingly, the bending process of the metal plate 140A may be easily performed, and occurrence of a spring-back phenomenon can be reduced or minimized, particularly after the bending process.

In some embodiments, the metal plate 140A may have a substantially planar top surface and a substantially planar bottom surface. The top surface of the metal plate 140A may be subjected to insulation treatment. In one or more embodiments, a thin insulation film may be located on the top surface of metal plate 140A by forming a thin oxide layer (e.g., an anodizing layer) through a metal oxidation process or coating or laminating an insulation resin (e.g., polyimide, polypropylene or polyethylene). In one or more embodiments, the top surface of the metal plate 140A may correspond to the interior surface of the can 140, and the bottom surface of the metal plate 140A may correspond to the exterior surface of the can 140.

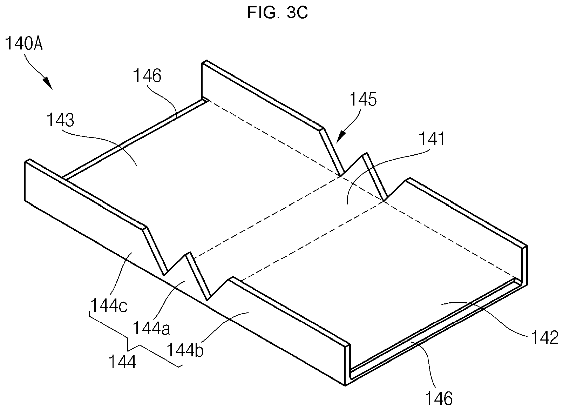

FIG. 3C shows a can at a later stage of manufacture. In the example shown in FIG. 3C, the metal plate 140A may be bent in a set or predetermined shape. In one or more embodiments, the metal plate 140A may be bent in a set or predetermined shape after it is fixed by a bending machine or a press mold.

In one or more embodiments, the long side portions 142 and 143 bent and extended from the respective long sides of the bottom portion 141 in a substantially perpendicular (normal) direction (with respect to the bottom portion 141), and the short side portions 144 and 145 bent and extended from the bottom portion 141 and the long side portions 142 and 143 in a substantially perpendicular (normal) direction (with respect to the bottom portion 141 and the long side portions 142 and 143), may be provided as the result of the bending process. For example, the long side portions 142 and 143 may be bent approximately (about) 90 degrees from the long sides of the bottom portion 141 to then be extended, and the short side portions 144 and 145 may be bent approximately (about) 90 degrees from the short sides of the bottom portion 141 to then be extended and may be bent approximately (about) 90 degrees from the long side portions 142 and 143 to then be extended.

Therefore, the first short side portion 144a, the second short side portion 144b and the third short side portion 144c may be positioned to face one another and their peripheries (outer edges) may be matched (aligned) with one another and/or may contact one another. Here, as shown in FIG. 3A, a vertical angle between the upper periphery of the first short side portion 144a and the short side of the bottom portion 141 may be in the range from approximately (about) 40 degrees to approximately (about) 50 degrees, for example, 45 degrees. In some embodiments, a vertical angle between the periphery of the first short side portion 144a facing the second short side portion 144b or the third short side portion 144c, and the periphery of the respective one of the second and third short side portions 144b and 144c facing the first short side portion 144a may be in the range from approximately (about) 80 degrees to approximately (about) 100 degrees, for example, 90 degrees.

In one or more embodiments, an angle defined between each of two upper peripheries of the first short side portion 144a and the short side of the bottom portion 141 may be in the range from approximately (about) 40 degrees to approximately (about) 50 degrees, for example, 45 degrees, an angle defined between the periphery of the second short side portion 144b facing one periphery of the first short side portion 144a and the long side portion 142 may be in the range from approximately (about) 40 degrees to approximately (about) 50 degrees, for example, 45 degrees, and the periphery of the third short side portion 144c facing the other periphery of the first short side portion 144a and the long side portion 143 may be in the range from approximately (about) 40 degrees to approximately (about) 50 degrees, for example, 45 degrees. Accordingly, a vertex at which the bottom portion 141, the one long side portion 142, the first short side portion 144a and the second short side portion 144b meet, and a vertex at which the bottom portion 141, the long side portion 143 meet, the first short side portion 144a and the third short side portion 144c, may be bent in a substantially round shape.

Meanwhile, FIG. 3C shows an example in which the short side portion 144 (or 145) is bent from the bottom portion 141 and the long side portion 142 (or 143). That is, FIG. 3C shows an example in which the long side portion 142 has yet to be bent from the bottom portion 141.

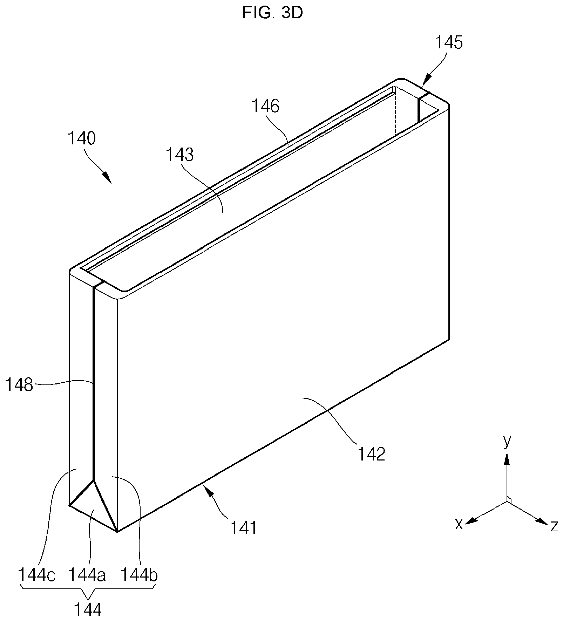

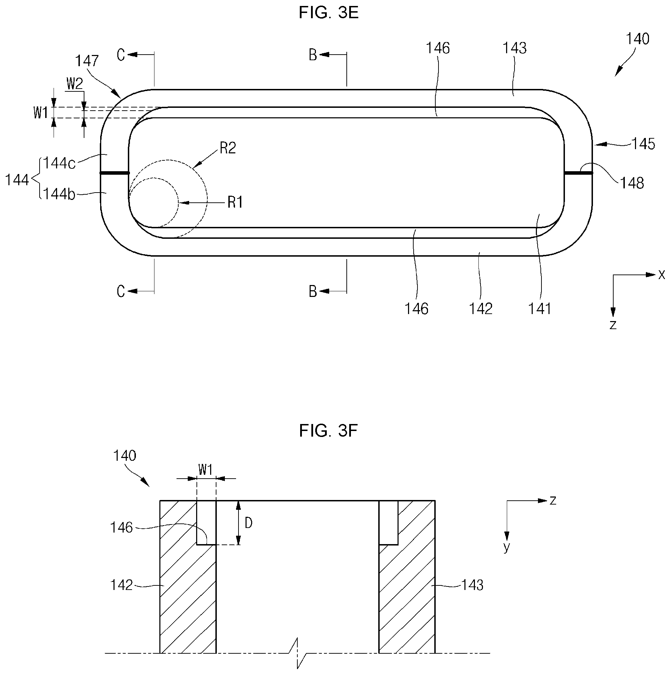

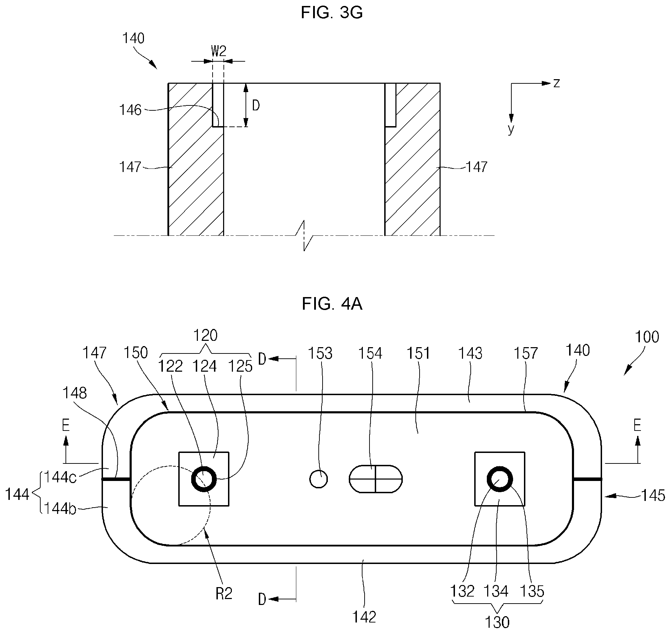

FIG. 3D shows a can at a later stage of manufacture. FIG. 3E is a plan view of a can. FIG. 3F is a cross-sectional view taken along the line B-B of FIG. 3E, and FIG. 3G is a cross-sectional view taken along the line C-C of FIG. 3E.

In the example shown in FIG. 3D, a welding process may be performed. In one or more embodiments, the welding process may be performed by laser welding, ultrasonic welding and/or resistance welding. In the present invention, welding portions 148 are located in each of the short side portions 144 and 145. The welding portions 148 may be located in a boundary region between the first short side portion 144a and the second short side portion 144b, a boundary region between the first short side portion 144a and the third short side portion 144c and a boundary region between the second short side portion 144b and the third short side portion 144c.

In one or more embodiments, the welding portions 148 may include a butt joint structure, a lab joint structure, a cover joint structure and/or an edge joint structure. In one or more embodiments, the welding portions 148 may be in a substantially inverted Y-shaped ("λ") configuration. The welding portions 148 may be indicated by solid lines. Therefore, the first short side portion 144a may be perfectly (suitably) and securely fixed to the second and third short side portions 144b and 144c owing (due) to the welding portions 148, and the second and third short side portions 144b and 144c (or the second short side portions 144b and 144c) may perfectly (suitably) and securely fixed to each other.

Referring to FIGS. 3E, 3F and 3G, the second direction (y-axis) height D of the stepped part 146 is uniformly maintained in the long side portions 142 and 143 and the curved portions 147. However, the first direction (z-axis) depth W1 of the stepped part 146 in the long side portion 142 is larger than the first direction (z-axis) depth W2 of the stepped part 146 in the curved portions 147 (W1>W2). Accordingly, as shown in FIG. 3E, in the curved portions 147 of the can 140, an interior curvature radius R2 of a top end of the can 140 having the stepped parts 146 is different from an interior curvature radius R1 of a bottom end of the can 140. In other words, after the can 140 is assembled, because the stepped parts 146 are located in the long side portions 142 and 143 and the curved portions 147 at the top end of the can 140, and the first direction (z-axis) depth W2 of the stepped parts 146 in the curved portions 147 is gradually reduced toward the short side portions 144 and 145, the interior curvature radius R2 of the top end of the can 140 in the curved portions 147 is larger than the interior curvature radius R1 of the bottom end of the can 140. As described above, if the first direction (z-axis) depth W2 of the stepped part 146 in the curved portions 147 is made to be gradually reduced toward the short side portions 144 and 145, the corner of the cap plate 150 coupled to the stepped part 146 may be made to have a curved shape.

The embodiments of the present invention provide the can 140 configured such that the first short side portion 144a is bent and extended from the bottom portion 141, the second and third short side portions 144b and 144c are bent and extended from the long side portions 142 and 143, and the first, second and third short side portions 144a, 144b and 144c are connected to one another through the welding portions 148 to construct one single short side portion 144, thereby increasing bending and welding workability, and improving sealing efficiency to prevent or reduce leakage of electrolyte.

Here, since the first short side portion 144a is bent and extended from the corresponding edge of the bottom portion 141, a welding process is not necessarily performed between the edge of the bottom portion 141 corresponding to (adjacent to) the first short side portion 144a and the first short side portion 144a. In some embodiments, since the second and third short side portions 144b and 144c are bent and extended from the corresponding long side portions 142 and 143, respectively, a welding process is not necessarily needed to be performed between the edges of the long side portions 142 and 143 corresponding to (adjacent to) the second and third short side portions 144b and 144c and the second and third short side portions 144b and 144c. These configurations can be commonly applied to between the long side portions 142 and 143 and another short side portion 145.

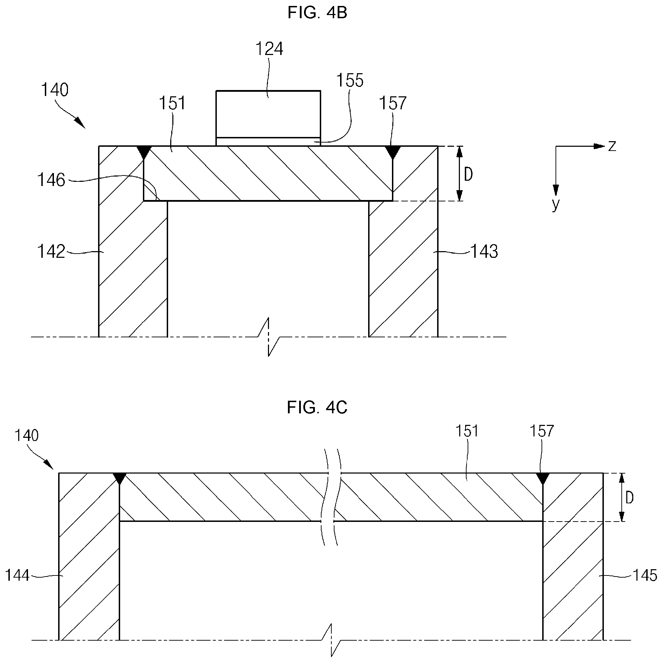

FIG. 4A is a plan view illustrating an example secondary battery, FIG. 4B is a cross-sectional view taken along the line D-D of FIG. 4A, and FIG. 4C is a cross-sectional view taken along the line E-E of FIG. 4A.

As shown in FIG. 4A, the cap assembly 150 is mounted on the case 140 manufactured by the method shown in FIGS. 3A to 3G, and an interfacial surface between the can 140 and the cap plate 151 is then welded, thus completing the secondary battery 100. A welding portion 157 between the can 140 and the cap plate 151 may be connected to the welding portions 148 between the second short side portion 144b and the third short side portion 144c. The cap plate 151 may be shaped to correspond to the top opening of the can 140 having the stepped part 146. In other words, a thickness D of the cap plate 151 may be equal to the second direction (y-axis) thickness D of the stepped part 146 (see FIGS. 4B and 4C), the curvature radius R2 of the corner of the cap plate 151 may be equal to the interior curvature radius R2 of the top end of the can 140 in the curved portions 147, where the stepped parts 146 are located (see FIG. 4A).

As described above, according to the present invention, the stepped parts 146 are provided in the long side portions 142 and 143 and the curved portions 147, rather than in the short side portions 144 and 145 of the can 140, thereby stably (suitably) supporting the cap plate 151 even if the length of the can 140 is increased.

According to various embodiments of the present invention, because the stepped part 146 is provided in the long side portions 142 and 143 and the curved portions 147 by a forging process using a press in a state in which the can 140 is in form of the metal plate 140A which has yet to be bent, manufacturability can be improved reducing the processing cost.

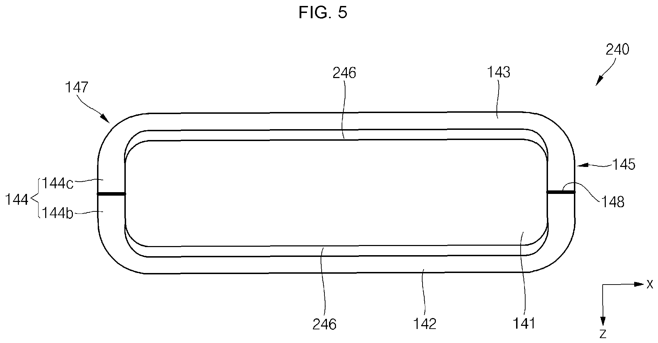

FIG. 5 is a plan view illustrating a stepped part formed in a can of an example secondary battery.

As shown in FIG. 5, the can 240 may include a rectangular bottom portion 141 having long sides and short sides, long side portions 142 and 143 bent and extended from the respective long sides of the bottom portion 141 toward a cap assembly, short side portions 144 and 145 extended from the respective short sides of the bottom portion 141 and the long side portions 142 and 143, and a stepped part 246 located at an interior edge of a top end of the can 240. The stepped part 246 may be extended along the long side portions 142 toward the curved portions 147 and some portions of the short side portions 144. However, the stepped part 246 may not be located in the welding portions 148 of the short side portions 144, where the second short side portion 144b and the third short side portion 144c are welded, which is for the purpose of securing a welding area and a welding thickness of the welding portions 148 when the second short side portion 144b and the third short side portion 144c are welded. A first direction (x-axis) depth of the stepped part 246 may be uniformly maintained in the long side portion 142, while being gradually reduced in the curved portions 147 and the short side portion 144. In some embodiments, a second direction (y-axis) height of the stepped part 246 may be uniformly maintained in all of the long side portion 142, the curved portions 147 and the short side portion 144.

## Claims

1. A secondary battery comprising:
an electrode assembly (110, 120);
a case (140) configured to accommodate the electrode assembly (110, 120), the case (140) comprising a bottom portion (141), long side portions (142, 143), and short side portions (144, 145),
a cap plate (151) coupled to the case (140),
the long side portions (142, 143) comprising one or more stepped parts (146), located at the ends of said long side portions that are facing away from the bottom portion (141),
wherein curved portions (147) are located between the long side portions (142, 143) and the short side portions (144, 145), wherein the stepped parts (146) extend along the long side portions (142, 143) toward the curved portions (147),
wherein the stepped parts (146) each have a depth (W2) in the curved portions (147) in a first direction, the first direction being a thickness direction of the case (140),
**characterized in that**,
the short side portions (144, 145) are bent and welded and welding portions (148) are located in each of the short side portions (144,145), and
wherein the depth (W2) of each of the stepped parts (146) in the curved portions (147) is gradually reduced toward the short side portions (144, 145).

2. The secondary battery of claim 1, wherein each of the long side portions (142, 143) of the case (140) comprises one or more of the stepped parts (146).

3. The secondary battery of one of the claims 1 to 2, wherein the short side portions (144, 145) of the case (140) comprise one or more stepped parts (246), and/or
each of the short side portions (144, 145) of the case (140) comprises one or more stepped parts (246).

4. The secondary battery of one of the claims 1 to 3, wherein the stepped parts (146) have a uniform depth (W1) in the long side portions (142, 143) in a first direction, the first direction being a thickness direction of the case (140).

5. The secondary battery of one of the claims 1 to 4, wherein the stepped parts (146) extend along entire lengths of the long side portions (142, 143).

6. The secondary battery of one of the claims 1 to 5, wherein an interior curvature radius (R2) of a top end of the case (140) having the stepped parts (146) is larger than an interior curvature radius (R1) of a bottom end of the case (140).

7. The secondary battery of claim 6, wherein a curvature radius of a corner of the cap plate (151) is equal to the interior curvature radius (R2) of the top end of the case (140).

8. The secondary battery of one of the claims 1 to 7, wherein the stepped parts (146) have a uniform height (D) in a second direction in the long side portions (142, 143) and the curved portions (147), the second direction being a height direction of the case (140).

9. The secondary battery of claim 8, wherein the height (D) of each of the stepped parts (146) in the second direction is equal to a thickness of the cap plate (151) in the second direction.

10. The secondary battery of one of the claims 1 to 9, wherein the stepped parts (246) extend from the curved portions (147) to portions of the short side portions (144, 145).

11. The secondary battery of claim 10, wherein the stepped parts (246) have a depth in the short side portions (144, 145) in a first direction, the first direction being a thickness direction of the case (240), and
the depth of the stepped parts (246) in the short side portions (144, 145) is gradually reduced.

12. The secondary battery of one of the claims 1 to 11, wherein the cap plate (151) is coupled to the stepped parts (146).

13. The secondary battery of one of the claims 1 to 12, wherein each of the short side portions (144, 145) is configured by combining a first short side portion (144a) bent and extended from the bottom portion (141) and second and third short side portions (144b, 144c) extending from a respective one of the long side portions (142, 143), and
the short side portions (144, 145) comprise welding portions (148) which connect the first, second, and third short side portions (144a, 144b, 144c) to each other by welding.

## Patentansprüche

1. Eine Sekundärbatterie, aufweisend:
eine Elektrodenanordnung (110, 120);
ein Gehäuse (140), das konfiguriert ist, um die Elektrodenanordnung (110, 120) aufzunehmen, wobei das Gehäuse (140) einen Bodenabschnitt (141), lange Seitenabschnitte (142, 143) und kurze Seitenabschnitte (144, 145) aufweist,
eine Deckplatte (151), die mit dem Gehäuse (140) gekoppelt ist,
wobei die langen Seitenabschnitte (142, 143) einen oder mehrere gestufte Teile (146) aufweisen, die an den Enden der besagten langen Seitenabschnitte, welche vom Bodenabschnitt (141) abgewandt sind, angeordnet sind,
wobei gekrümmte Abschnitte (147) zwischen den langen Seitenabschnitten (142, 143) und den kurzen Seitenabschnitten (144, 145) angeordnet sind, wobei sich die gestuften Teile (146) entlang der langen Seitenabschnitte (142, 143) zu den gekrümmten Abschnitten (147) hin erstrecken,
wobei die gestuften Teile (146) jeweils eine Tiefe (W2) in den gekrümmten Abschnitten (147) in einer ersten Richtung aufweisen, wobei die erste Richtung eine Dickenrichtung des Gehäuses (140) ist,
**dadurch gekennzeichnet, dass**
die kurzen Seitenabschnitte (144, 145) gebogen und geschweißt sind und Schweißabschnitte (148) in jedem der kurzen Seitenabschnitte (144, 145) angeordnet sind, und
wobei sich die Tiefe (W2) jedes der gestuften Teile (146) in den gekrümmten Abschnitten (147) zu den kurzen Seitenabschnitten (144, 145) hin schrittweise verringert.

2. Die Sekundärbatterie nach Anspruch 1, wobei jeder der langen Seitenabschnitte (142, 143) des Gehäuses (140) einen oder mehrere der gestuften Teile (146) aufweist.

3. Die Sekundärbatterie nach einem der Ansprüche 1 bis 2, wobei die kurzen Seitenabschnitte (144, 145) des Gehäuses (140) einen oder mehrere gestufte Teile (246) aufweisen und/oder
jeder der kurzen Seitenabschnitte (144, 145) des Gehäuses (140) einen oder mehrere gestufte Teile (246) aufweist.

4. Die Sekundärbatterie nach einem der Ansprüche 1 bis 3, wobei die gestuften Teile (146) eine gleichmäßige Tiefe (W1) in den langen Seitenabschnitten (142, 143) in einer ersten Richtung aufweisen, wobei die erste Richtung eine Dickenrichtung des Gehäuses (140) ist.

5. Die Sekundärbatterie nach einem der Ansprüche 1 bis 4, wobei sich die gestuften Teile (146) entlang gesamter Längen der langen Seitenabschnitte (142, 143) erstrecken.

6. Die Sekundärbatterie nach einem der Ansprüche 1 bis 5, wobei ein innerer Krümmungsradius (R2) eines oberen Endes des Gehäuses (140), das die gestuften Teile (146) aufweist, größer als ein innerer Krümmungsradius (R1) eines unteren Endes des Gehäuses (140) ist.

7. Die Sekundärbatterie nach Anspruch 6, wobei ein Krümmungsradius einer Ecke der Deckplatte (151) gleich dem inneren Krümmungsradius (R2) des oberen Endes des Gehäuses (140) ist.

8. Die Sekundärbatterie nach einem der Ansprüche 1 bis 7, wobei die gestuften Teile (146) eine gleichmäßige Höhe (D) in einer zweiten Richtung in den langen Seitenabschnitten (142, 143) und den gekrümmten Abschnitten (147) aufweisen, wobei die zweite Richtung eine Höhenrichtung des Gehäuses (140) ist.

9. Die Sekundärbatterie nach Anspruch 8, wobei die Höhe (D) jedes der gestuften Teile (146) in der zweiten Richtung gleich einer Dicke der Deckplatte (151) in der zweiten Richtung ist.

10. Die Sekundärbatterie nach einem der Ansprüche 1 bis 9, wobei sich die gestuften Teile (246) von den gekrümmten Abschnitten (147) zu Abschnitten der kurzen Seitenabschnitte (144, 145) erstrecken.

11. Die Sekundärbatterie nach Anspruch 10, wobei die gestuften Teile (246) eine Tiefe in den kurzen Seitenabschnitten (144, 145) in einer ersten Richtung aufweisen, wobei die erste Richtung eine Dickenrichtung des Gehäuses (240) ist, und
wobei sich die Tiefe der gestuften Teile (246) in den kurzen Seitenabschnitten (144, 145) schrittweise verringert.

12. Die Sekundärbatterie nach einem der Ansprüche 1 bis 11, wobei die Deckplatte (151) mit den gestuften Teilen (146) gekoppelt ist.

13. Die Sekundärbatterie nach einem der Ansprüche 1 bis 12, wobei jeder der kurzen Seitenabschnitte (144, 145) dadurch konfiguriert ist, dass ein erster kurzer Seitenabschnitt (144a), der gebogen ist und sich vom Bodenabschnitt (141) erstreckt, und ein zweiter und dritter kurzer Seitenabschnitt (144b, 144c), die sich von einem jeweiligen der langen Seitenabschnitte (142, 143) erstrecken, kombiniert werden, und
wobei die kurzen Seitenabschnitte (144, 145) Schweißabschnitte (148), die den ersten, zweiten und dritten kurzen Seitenabschnitt (144a, 144b, 144c) durch Schweißen miteinander verbinden, aufweisen.

## Revendications

1. Batterie secondaire comprenant :
un ensemble d'électrodes (110, 120) ;
un boîtier (140) configuré pour loger l'ensemble d'électrodes (110, 120), le boîtier (140) comprenant une partie de fond (141), des parties latérales longues (142, 143) et des parties latérales courtes (144, 145),
une plaque formant capuchon (151) couplée au boîtier (140),
les parties latérales longues (142, 143) comprenant une ou plusieurs parties étagées (146) positionnées aux extrémités desdites parties latérales longues qui sont orientées à l'opposé de la partie de fond (141),
dans laquelle des parties incurvées (147) sont positionnées entre les parties latérales longues (142, 143) et les parties latérales courtes (144, 145), où les parties étagées (146) s'étendent le long des parties latérales longues (142, 143) vers les parties incurvées (147),
dans laquelle les parties étagées (146) ont chacune une profondeur (W2) dans les parties incurvées (147) dans une première direction, la première direction étant une direction d'épaisseur du boîtier (140),
**caractérisée en ce que** :
les parties latérales courtes (144, 145) sont pliées et soudées et des parties de soudage (148) sont positionnées dans chacune des parties latérales courtes (144, 145), et
dans laquelle la profondeur (W2) de chacune des parties étagées (146) dans les parties incurvées (147) est progressivement réduite vers les parties latérales courtes (144, 145).

2. Batterie secondaire selon la revendication 1, dans laquelle chacune des parties latérales longues (142, 143) du boîtier (140) comprend une ou plusieurs des parties étagées (146) .

3. Batterie secondaire selon l'une des revendications 1 à 2, dans laquelle les parties latérales courtes (144, 145) du boîtier (140) comprennent une ou plusieurs parties étagées (246), et/ou
chacune des parties latérales courtes (144, 145) du boîtier (140) comprend une ou plusieurs parties étagées (246) .

4. Batterie secondaire selon l'une des revendications 1 à 3, dans laquelle les parties étagées (146) ont une profondeur uniforme (W1) dans les parties latérales longues (142, 143) dans une première direction, la première direction étant une direction d'épaisseur du boîtier (140).

5. Batterie secondaire selon l'une des revendications 1 à 4, dans laquelle les parties étagées (146) s'étendent le long de toutes les longueurs des parties latérales longues (142, 143).

6. Batterie secondaire selon l'une des revendications 1 à 5, dans laquelle un rayon de courbure intérieur (R2) d'une extrémité supérieure du boîtier (140) ayant les parties étagées (146) est supérieur à un rayon de courbure intérieur (R1) d'une extrémité inférieure du boîtier (140).

7. Batterie secondaire selon la revendication 6, dans laquelle un rayon de courbure d'un coin de la plaque formant capuchon (151) est égal au rayon de courbure intérieur (R2) de l'extrémité supérieure du boîtier (140).

8. Batterie secondaire selon l'une des revendications 1 à 7, dans laquelle les parties étagées (146) ont une hauteur (D) uniforme dans une seconde direction dans les parties latérales longues (142, 143) et les parties incurvées (147), la seconde direction étant une direction de hauteur du boîtier (140).

9. Batterie secondaire selon la revendication 8, dans laquelle la hauteur (D) de chacune des parties étagées (146) dans la seconde direction est égale à une épaisseur de la plaque formant capuchon (151) dans la seconde direction.

10. Batterie secondaire selon l'une des revendications 1 à 9, dans laquelle les parties étagées (246) s'étendent à partir des parties incurvées (147) vers des parties des parties latérales courtes (144, 145).

11. Batterie secondaire selon la revendication 10, dans laquelle les parties étagées (246) ont une profondeur dans les parties latérales courtes (144, 145) dans une première direction, la première direction étant une direction d'épaisseur du boîtier (240), et
la profondeur des parties étagées (246) dans les parties latérales courtes (144, 145) est progressivement réduite.

12. Batterie secondaire selon l'une des revendications 1 à 11, dans laquelle la plaque formant capuchon (151) est couplée aux parties étagées (146).

13. Batterie secondaire selon l'une des revendications 1 à 12, dans laquelle chacune des parties latérales courtes (144, 145) est configurée en combinant une première partie latérale courte (144a) pliée et étendue à partir de la partie de fond (141) et des deuxième et troisième parties latérales courtes (144b, 144c) s'étendant à partir d'une partie respective des parties latérales longues (142, 143), et
les parties latérales courtes (144, 145) comprennent des parties de soudage (148) qui raccordent les première, deuxième et troisième parties latérales courtes (144a, 144b, 144c) entre elles par soudage.
